# FASCICULE DE BREVET EUROPEEN

(11) **EP 0 675 777 B1**
(45) Date de publication et mention de la délivrance du brevet: **21.05.1997**
(21) Numéro de dépôt: 94902829.4
(22) Date de dépôt: 17.12.1993
(51) Int. Cl.: B23B 31/16

(54) **MANDRIN AUTOMATIQUE**
AUTOMATISCHES DREHFUTTER
AUTOMATIC CHUCK

(30) Priorité: 21.12.1992 FR 9215378
(43) Date de publication de la demande: 11.10.1995
(73) Titulaire: LADNER-AMV, F-27201 Vernon (FR)
(72) Inventeur: VOISARD, André, F-27200 Vernon (FR)
(74) Mandataire: Hirsch, Marc-Roger
(86) Numéro de dépôt international: FR9301263
(87) Numéro de publication internationale: WO9414559

(56) Documents cités:
- DE-A- 2 708 755
- FR-A- 2 548 566

## Description

La présente invention a pour objet un mandrin automatique, comprenant un corps de mandrin et une pluralité de mors coulissant dans des rainures radiales du corps de mandrin.

Il existe principalement deux types de mandrins pour machines-outils: des mandrins manuels et des mandrins automatiques. Ces deux types de mandrins sont employés de façon différente.

Les mandrins manuels sont des dispositifs relativement simples, qui sont serrés ou desserrés par un opérateur avec une clé ou un outil de même type. En conséquence, le couple de serrage n'est jamais très élevé, ce qui limite la vitesse de rotation admissible du point de vue de la sécurité. De plus, il est difficile de doser précisément la force de serrage. Le serrage obtenu est souvent imprécis, à cause du problème de la répartition de l'effort de serrage, mais aussi à cause des tolérances assez faibles des usinages de la couronne dentée de serrage.

Les mandrins manuels sont donc réservés aux usinages de pièces simples à vitesse moyenne, inférieure ou égale à 3 500 tr/min, nécessitant une précision supérieure ou égale à 3/100. On peut citer comme exemple de tels mandrins manuels les mandrins à spirales constitués essentiellement d'un plateau comportant une spirale d'Archimède, d'une pièce guide-mors présentant des rainures radiales, et de mors qui coulissent dans les rainures radiales de la pièce guide-mors et sont en prise sur la spirale du plateau. La rotation relative du plateau et de la pièce guide-mors déplace les mors vers l'intérieur ou vers l'extérieur. Habituellement, le plateau est équipé en périphérie sur sa face opposée d'une couronne dentée et le serrage se fait à l'aide de pignons en prise sur cette couronne. Ce type de mandrin à spirale n'existe que pour les mandrins manuels; il présente, en effet, des problèmes d'équilibrage dynamique des mors dont les dents doivent être décalés les unes par rapport aux autres. L'usinage précis d'une spirale est coûteux et difficile, aussi se contente-t-on d'un usinage relativement imprécis et ce type de mandrins ne permet pas une grande précision de serrage, ni une grande force de serrage. Du fait de la structure en spirale, le démontage des mors est malaisé, car il implique une rotation du plateau sur un grand nombre de tours. Enfin, ce type de mandrins n'assure pas un serrage homogène, du fait du choix d'une liaison pignon-couronne. Lorsque l'opérateur serre le mandrin, il manoeuvre un seul pignon et les efforts sont localisés en un point précis de la couronne. Ceci peut conduire à des déformations de la couronne du plateau et nuire à la qualité du serrage. Les mandrins à spirale sont donc considérés comme des dispositifs uniquement utilisables manuellement et à faible vitesse.

Les mandrins automatiques sont des dispositifs plus complexes et plus coûteux, généralement montés à demeure sur une machine-outil, et qui permettent un serrage plus important et plus précis. Ils sont utilisés pour des vitesses de rotation plus élevées. Les mandrins automatiques existants sont principalement des mandrins à pince expansible, à rampe ou à leviers. Les mandrins automatiques à pince expansible sont des outils de grande précision, mais qui présentent une course très réduite et qui ne sont utilisés que dans le cadre d'applications très spécifiques. On trouve plus couramment des mandrins à leviers ou à rampe. Dans ces types de mandrin, un tube de liaison rotatif est monté coaxial avec l'axe de rotation du mandrin; à l'une de ses extrémités, ce tube actionne le serrage ou le desserrage du mandrin. A l'autre extrémité, il comporte un système de déplacement, comme par exemple un flasque constituant le piston d'un vérin rotatif double effet, et qui est susceptible d'entraîner dans un mouvement de translation axiale le tube de liaison. Le vérin double effet est relié à une centrale hydraulique. La partie centrale du tube de liaison traverse le corps de la machine-outil.

Un mandrin à leviers comprend une pièce porte-leviers, des porte-mors, des mors et des leviers. La pièce porte-leviers comporte une série de fentes radiales, dans lesquelles se déplacent les porte-mors, et est entraînée en rotation par la machine-outil. La pièce porte-leviers présente des axes orthoradiaux, sur lesquels sont montés à pivot des leviers susceptibles de pivoter dans un plan axial. Le pivotement des leviers autour de leur axe est contrôlé par le déplacement axial du tube de liaison. Les leviers commandent le mouvement radial des pièces porte-mors, sur lesquelles sont fixés les mors. Ainsi, le mouvement axial du tube de liaison est transformé par les leviers en un mouvement radial des porte-mors. Toutefois, ce mouvement est un mouvement d'amplitude assez faible et il est donc prévu que les mors sont fixés sur les porte-mors de façon à pouvoir être facilement déplacés, pour changer la course des mors. Par exemple, le porte-mors et le mors comportent chacun une denture et sont fixés l'un à l'autre par des boulons. De la sorte, sur ce type de mandrin automatique, on dispose d'un réglage manuel impliquant un démontage des mors et d'un réglage automatique sur une course plus faible, par action sur le tube de liaison.

Le mandrin à rampe présente sensiblement la même configuration et comprend une pièce de guidage, des porte-mors, une pièce à rampes. La pièce de guidage comporte une série de fentes radiales où sont engagés, en translation, les porte-mors. L'extrémité du tube de liaison est reliée à la pièce à rampes qui présente des rampes dans des plans radiaux, formant avec l'axe de rotation un angle aigu. La partie inférieure de chaque pièce porte-mors est susceptible de s'engager dans une rampe. Ainsi, le mouvement axial du tube de liaison et de la pièce à rampes qui lui est reliée, entraîne un déplacement radial des porte-mors. Des mors sont fixés sur les porte-mors, comme dans le cas du mandrin à leviers décrit ci-dessus. On retrouve dans les mandrins à rampe un réglage manuel et un réglage automatique, sur une course plus faible.

Ces mandrins automatiques connus présentent des inconvénients. Ils ne présentent qu'une course des mors réduite et ne sont donc pas susceptibles de s'adapter rapidement à un éventail étendu de taille des produits à saisir. Pour augmenter la plage de travail, il est nécessaire de démonter manuellement les mors, ce qui fait perdre les avantages obtenus du fait de l'automatisation du mandrin. De plus, la présence de porte-mors conduit à une augmentation importante de la masse en rotation, qui implique un desserrage et qui limite, pour des raisons de sécurité, la vitesse de rotation. Les mors sont montés sur les porte-mors en saillie, et ceci conduit en rotation à un couple de desserrage, dû à la force centrifuge sur les mors. De plus, la combinaison de la force centrifuge et de la force de maintien du porte-mors par le levier ou par la rampe conduisent à un couple dans le sens du desserrage. Un autre inconvénient est l'indépendance des mors et la possibilité, pour les vitesses importantes, d'un desserrage par triangulation du corps de mandrin. Comme les dispositifs comprennent nécessairement un jeu, entre les différentes pièces en mouvement, ils ne permettent pas un serrage précis ou une reprise de position facile. La répétabilité courante de serrage est de l'ordre du dixième de millimètre, ce qui est insuffisant pour les usinages précis. Par ailleurs, la plupart des mandrins automatiques existants fonctionnent avec une centrale hydraulique qui seule peut fournir la force suffisante pour maintenir les mors en position de serrage. De ce fait, la force centrifuge qui s'exerce sur les mors en rotation est transmise au tube de liaison, par l'intermédiaire des leviers ou des rampes. Enfin, dans les mandrins automatiques actuels, le tube de liaison traverse le bâti de la machine-outil et limite donc le passage de broche disponible. Les mandrins automatiques sont donc difficilement interchangeables d'une machine à une autre.

Le document FR-A-2 548 566 décrit un mandrin de serrage automatique à spirale, avec un moteur à fluide incorporé, qui comprend les caractéristiques du préambule de la revendication 1. Dans ce mandrin, l'entraînement de la couronne spiralée ne peut se faire que lorsque le mandrin est à l'arrêt.

Le document DE-A-27 08 755 décrit un mandrin à spirale, présentant un moteur extérieur de serrage ou desserrage des mors, susceptible de venir s'engréner sur une denture disposée sur l'arrière de la spirale. Lorsque ce moteur est en position de fonctionnement, il bloque la rotation du mandrin.

La présente invention propose un mandrin automatique qui pallie les inconvénients des mandrins automatiques connus. Elle permet une course importante des mors, sans nécessiter montage ou démontage. Elle assure une précision, sur toute la course des mors, de l'ordre de un ou deux centièmes de millimètres, et permet une reprise de position avec la même précision. Elle n'implique plus de limiter le passage des broches du fait d'un tube de liaison, et rend possible un démontage rapide du mandrin pour l'adapter sur différentes machines. Elle évite l'utilisation d'une centrale hydraulique. Dans le mandrin selon l'invention, le couple de desserrage est beaucoup moins important, et les mors sont plus légers. On limite donc le desserrage et la triangulation du corps de mandrin et on peut augmenter la vitesse de rotation en respectant les normes de sécurité. Enfin, la présente invention permet facilement d'asservir le serrage en fonction de la vitesse, de façon à ne serrer qu'avec la force strictement nécessaire à l'usinage envisagé. On obtient ainsi une compensation en continu de la force de serrage.

L'invention a pour objet un mandrin automatique, comprenant un corps de mandrin, une couronne spiralée montée rotative dans le corps de mandrin, une pluralité de mors coulissant dans des rainures radiales du corps de mandrin et présentant une denture en prise avec ladite couronne spiralée, des moyens d'entraînement en rotation de la couronne spiralée par rapport au corps de mandrin, qui est caractérisé en ce que lesdits moyens d'entraînement sont susceptibles d'entraîner en rotation ladite couronne spiralée en continu et/ou par intermittence, au cours de la rotation du mandrin.

Selon un mode de réalisation de l'invention, le mandrin comprend une bague d'alimentation en air comprimé, libre en rotation par rapport au corps de mandrin, et en ce que les moyens d'entraînement sont commandés par air comprimé. Les moyens d'entraînement comprennent un moteur à palettes. Avantageusement, les moyens d'entraînement comprennent un réducteur.

Le moteur à palettes comprend un rotor à palettes, et un cylindre compris dans le corps de mandrin présentant une ou plusieurs chambres.

Selon un autre mode de réalisation de l'invention, la bague d'alimentation débouche sur trois conduits du corps de mandrin, respectivement d'échappement, d'alimentation de serrage et d'alimentation de desserrage, reliés audit moteur à palettes.

En outre, le réducteur est constitué d'un porte-satellites relié audit moteur à palettes, dont les satellites sont en prise d'un part sur une denture de ladite couronne spiralée et d'autre part sur la denture d'un planétaire solidaire du corps de mandrin. Le porte-satellites du réducteur est relié par un rotor extérieur et par une entretoise au rotor du moteur à palettes. Selon encore un mode de réalisation de l'invention, le corps de mandrin comprend une interface d'alimentation, un cylindre, une entretoise extérieure et un corps formant un ensemble rigide, et une bague d'alimentation, un rotor, une entretoise, un porte-satellites et une couronne spiralée mobiles en rotation par rapport audit ensemble rigide.

Selon un mode de réalisation avantageux, les mors présentent chacun une cavité, décalée d'un mors à l'autre le long d'un côté du mors, pour assurer l'équilibrage dynamique des mors.

D'autres caractéristiques et avantages de l'invention apparaîtront à la lumière de la description qui suit d'un mode de réalisation de l'invention, donnée à titre d'exemple et en référence aux figures qui montrent:
- figure 1 une vue schématique en coupe partielle d'un mandrin automatique à leviers selon l'art antérieur;
- figure 2 une vue schématique en coupe d'un mandrin selon l'invention, qui ne montre que certaines pièces;
- figure 3 une vue schématique en coupe d'un mandrin selon l'invention, sur laquelle les moyens d'entraînement de la couronne spiralée sont représentés plus en détail;
- figure 4 une vue en coupe du mandrin selon l'invention, analogue à celle des figures 2 et 3, mais détaillant la structure du corps de mandrin;
- figure 5 une vue en perspective d'un mors de mandrin selon l'invention.

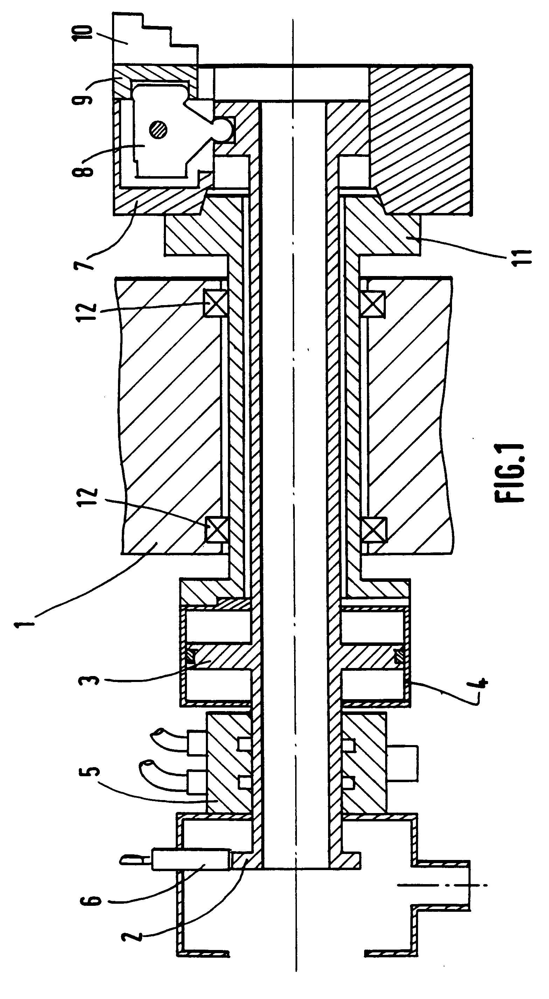

La figure 1 montre une vue schématique en coupe partielle d'un mandrin automatique à leviers selon l'art antérieur. On reconnaît sur la figure 1 les éléments suivants, à savoir le bâti 1 de la machine-outil, le tube de liaison 2 et son flasque 3 qui constitue le piston d'un vérin double effet 4 alimenté par un distributeur 5; le tube de liaison est muni d'un organe de contrôle de position 6. Le mandrin comprend une pièce porte-leviers 7, des leviers 8 qui entraînent des porte-mors 9 sur lesquels sont fixés les mors 10. L'ensemble est entraîné en rotation par un tube 11 monté sur le bâti 1 dans des roulements 12. Le porte-mors 9, représenté sur la figure 1, est, en rotation, soumis à la force centrifuge due à sa propre masse et à celle du mors 10, et à une force de maintien exercée par le levier 8. Le porte-mors coulisse librement dans une rainure de guidage de la pièce porte-leviers 7; la force de maintien centripète s'exerce sur le porte-mors 9 d'un côté de cette rainure de guidage, tandis que la force centrifuge s'exerce de l'autre côté de la rainure de guidage. Il en résulte un couple qui tend à ouvrir le mandrin. La course du mors est limitée par l'amplitude du mouvement de pivotement du levier 8 et ne dépasse donc pas une valeur de quelques millimètres.

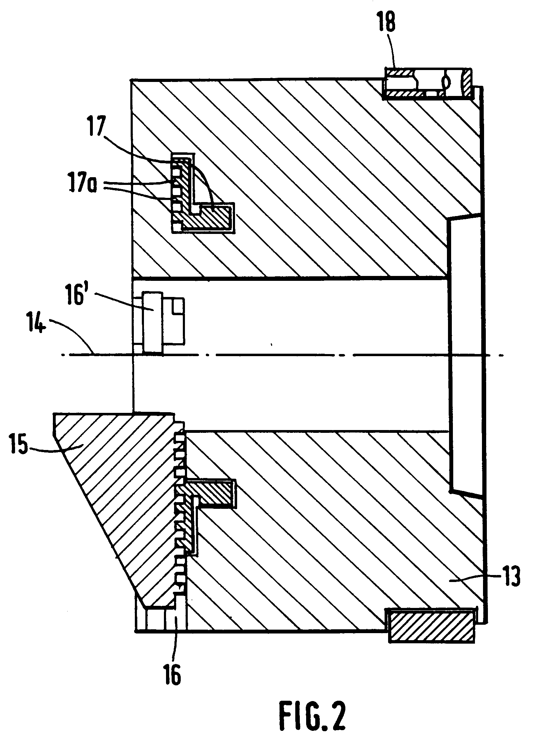

La figure 2 est une vue schématique en coupe d'un mandrin selon l'invention, qui ne montre que certaines pièces. La vue de la figure 2 est une coupe dans un plan axial, contenant un des mors. Le mandrin de la figure 2 comprend un corps de mandrin 13, destiné à être monté sur une machine-outil non représentée, en rotation autour d'un axe 14 ou en position fixe. Le mandrin comprend des mors 15, dont l'un est représenté sur la coupe de la figure 2. Ces mors sont disposés dans des rainures radiales 16, 16' du corps de mandrin, dans lesquelles ils coulissent librement. Ils sont maintenus en position par une couronne spiralée 17 montée en rotation autour de l'axe 14 et susceptible de tourner par rapport au corps de mandrin 13. Cette couronne spiralée est usinée pour comporter des nervures 17a à flancs en spirale d'Archimède. Les mors 15 présentent sur leur face arrière une denture complémentaire de celle des nervures 17a et qui est en prise sur la spirale d'Archimède de la couronne spiralée 17. De la sorte, le déplacement radial des mors 15 est contrôlé par la rotation de la couronne spiralée 17. La liaison entre la couronne 17 et les mors 15 est irréversible, et donc les forces centrifuges qui s'exercent en rotation sur les mors 15 ne peuvent pas conduire à une rotation de la couronne 17, et donc à un desserrage.

Le déplacement de la couronne spiralée 17 par rapport au corps de mandrin 13 est commandé par des moyens d'entraînement non représentés sur la figure 2; on a simplement représenté à la figure 2 une bague d'alimentation 18 fixe par rapport au bâti de la machine-outil, qui tourne donc par rapport au corps de mandrin 13. Dans un mode de réalisation de l'invention, les moyens d'entraînement en rotation de la couronne spiralée 17 par rapport au corps de mandrin 13 sont des moyens pneumatiques et, dans ce cas, la bague d'alimentation 18 est reliée à des arrivées d'air comprimé.

La figure 2 permet de comprendre les avantages de l'invention: les mors 15 ont une course importante dans les rainures radiales 16, 16' et permettent de saisir avec le mandrin des objets de tailles très diverses. Il n'est plus nécessaire, comme dans l'art antérieur, de démonter les mors fixés sur des porte-mors pour changer de plage de serrage. Une commande par une alimentation en air comprimé permet un déplacement rapide sur toute la course des mors. Grâce au caractère irréversible de la liaison entre la couronne spiralée 17 et les mors 15, il est possible de recourir à une alimentation simple en air comprimé, ce qui était impossible dans les machines connues, où les systèmes d'entraînement doivent fournir la force de maintien s'opposant à la force centrifuge des mors. L'absence de porte-mors permet de diminuer la taille et la masse des mors, de façon à diminuer les forces centrifuges. De plus, le problème du couple de desserrage provoqué par les forces de maintien et la force centrifuge est quasiment éliminé: une optimisation de la forme des mors permet de rapprocher leur centre de gravité de l'axe 14 et de la rainure 16. De la sorte, le couple de desserrage est considérablement plus faible que dans les systèmes antérieurs. En outre, la triangulation dans un mandrin selon l'invention, du fait du poids réduit des mors, est ainsi beaucoup moins importante.

Le démontage des mors est simple et rapide. A l'arrêt, la rotation de la couronne 17 permet d'expulser les mors 15 qui peuvent être remplacés et remontés par rotation de la couronne 17 dans le sens inverse.

L'usinage par commande numérique de la couronne spiralée 17 et des mors 15 permet d'atteindre selon l'invention une précision de la course qui est de l'ordre du centième de millimètres. Cette précision est identique sur toute la course des mors. Le mandrin selon l'invention est ainsi aussi précis que les mandrins à pince connus, tout en présentant une course très importante.

Comme on le voit sur la figure 2 et comme expliqué plus en détail dans la suite, les mandrins selon l'invention ne présentent aucun dispositif analogue au tube de liaison des mandrins de l'art antérieur. Ainsi, l'invention élimine toute dépendance du mandrin par rapport à la machine-outil. De la sorte, l'ensemble du corps de mandrin peut être utilisé pour transmettre des efforts et, de plus, le mandrin peut facilement être démonté pour être utilisé sur une autre machine. Comme l'invention propose une alimentation par air comprimé, le transfert du mandrin est très rapide. De plus, il n'est plus nécessaire d'employer un vérin qui limite la course des mors.

Enfin, l'invention permet un serrage en continu, en fonction de la vitesse de rotation du corps de mandrin 13. Il suffit en effet de compenser la force centrifuge de desserrage par une pression supplémentaire, ce qui assure un serrage constant.

Le tableau ci-dessous montre les avantages de l'invention. Il donne les caractéristiques de dispositifs communs à l'invention. On a porté en colonne le type de produit, la course des mors et la vitesse maximale de rotation, l'inertie et la masse du mandrin seul, l'inertie et la masse du vérin qui, dans les produits de l'art antérieur, assure le déplacement des mors, et enfin l'inertie et la masse de l'ensemble du mandrin.

| type de de produit | course mm | vitesse maxi tr/min | MANDRIN | | VERIN | | TOTAL | |
|---|---|---|---|---|---|---|---|---|
| | | | inertie kg.m² | masse kg | inertie kg.m² | masse kg | inertie kg.m² | masse kg |
| 1 | 8,3 | 4 200 | 0,392 | 46 | 0,145 | 37,5 | 0,537 | 83,5 |
| 2 | 4 | 3 500 | 1,6 | 35 | 0,28 | 27 | 1,88 | 62 |
| 3 | 50 | 9 000 | 0,5 | 50 | sans | sans | 0,5 | 50 |
| 1 = dispositif connu à leviers 2 = dispositif connu à rampes 3 = mandrin selon l'invention | | | | | | | | |

Ce tableau montre bien les avantages apportés par l'invention.

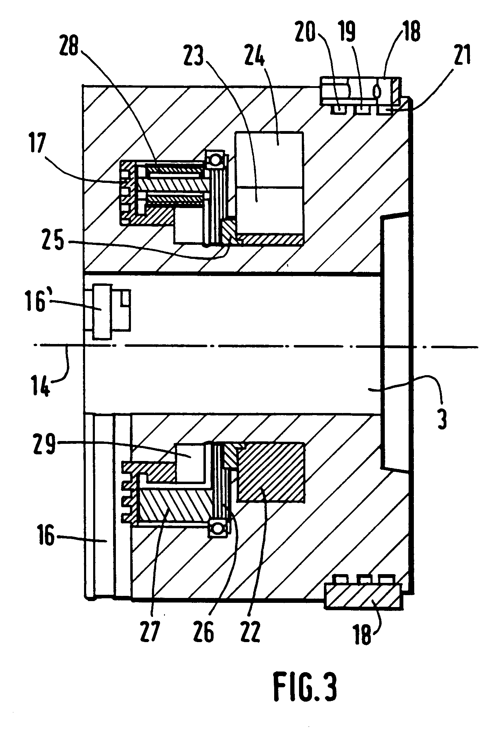

La figure 3 montre une vue en coupe axiale longitudinale d'un mandrin selon l'invention, sur laquelle les moyens d'entraînement de la couronne 17 sont représentés plus en détail. On retrouve sur la figure 3 la couronne spiralée 17, les rainures 16 et 16', le corps de mandrin 13, la bague d'alimentation 18. On n'a pas représenté sur la figure 3 les mors 15. Les moyens d'entraînement, dans l'exemple de réalisation de la figure 3, sont constitués par un moteur à palettes, suivi d'un réducteur à engrenages. Le moteur à palettes est alimenté en air comprimé, par l'intermédiaire de la bague 18. La bague 18 présente trois orifices, pour l'échappement de l'air comprimé et pour l'alimentation en air comprimé de serrage et de desserrage. Les orifices sont en communication avec des rainures circulaires 19, 20, 21 reliées à des canaux ménagés dans le corps du mandrin 13, qui assurent une liaison constante avec le moteur à palettes.

Le moteur à palettes comprend un rotor 22 qui est libre en rotation dans le corps de mandrin 13 et qui comprend une pluralité de palettes 23, disposées dans des fentes radiales. Le rotor 22 se déplace dans un cylindre ménagé dans le corps de mandrin 13, à l'intérieur duquel se trouve une ou plusieurs chambres 24. Les rainures d'échappement, d'alimentation de serrage et d'alimentation de desserrage 19, 20 et 21 sont reliées à des orifices dans la ou les chambres 24, de façon à agir sur les palettes pour entraîner en rotation le rotor 22 dans un sens ou dans l'autre. Le fonctionnement d'un moteur à palettes, connu en soi, n'est pas décrit plus en détail. Le rotor 22 du moteur à palettes est relié par une entretoise 25 à un rotor extérieur 26, ce rotor extérieur 26 entraîne en rotation un porte-satellites 27, libre en rotation dans le corps de mandrin 13 et qui comporte des pignons dentés satellites 28. Les satellites 28 sont en prise, d'une part, sur une denture extérieure de la couronne spiralée 17 et, d'autre part, sur la denture extérieure d'un planétaire 29, lié au corps de mandrin 13. Les porte-satellites, satellites, couronne spiralée et planétaire constituent un ensemble réducteur qui transmet le mouvement du rotor 22 du moteur à palettes à la couronne spiralée 17. Dans le mode de réalisation de la figure 3, les dentures de la couronne spiralée 17 et de l'excentrique 29 sont disposées à l'intérieur du porte-satellites 27, et viennent en prise sur le même côté des satellites 28. Le rapport de réduction est obtenu par un nombre de dents différent sur la denture de la couronne 17 et du planétaire 29. Dans un mode de réalisation préféré, ce rapport est de 1/75, la couronne 17 comportant 75 dents et le planétaire 29 comportant 74 dents. L'avantage du dispositif de la figure 3 est d'empêcher tout desserrage du mors en bloquant toute rotation de la couronne spiralée 17, sans qu'il soit nécessaire de maintenir une pression de blocage dans le moteur à palettes, car le réducteur constitue une liaison irréversible.

Le fonctionnement du dispositif de la figure 3 est le suivant: un flux d'air comprimé de serrage est transmis par la bague d'alimentation 18, via la rainure 20 et entraîne en rotation le rotor 22 du moteur à palettes, par rapport au corps de mandrin 13. Le rotor 22 entraîne le rotor extérieur 26 et le porte-satellites 27. La rotation du porte-satellites 27 par rapport au corps de mandrin, et donc par rapport au planétaire 29, entraîne en rotation les satellites. Du fait de la différence du nombre de dents entre les dentures du planétaire 29 et de la couronne spiralée 17, cette dernière tourne par rapport au corps de mandrin 13, ce qui conduit à un serrage des mors. Le desserrage des mors s'opère de façon analogue par alimentation en air comprimé de la rainure d'alimentation de desserrage 21, ce qui conduit à une rotation du moteur à palettes dans le sens inverse.

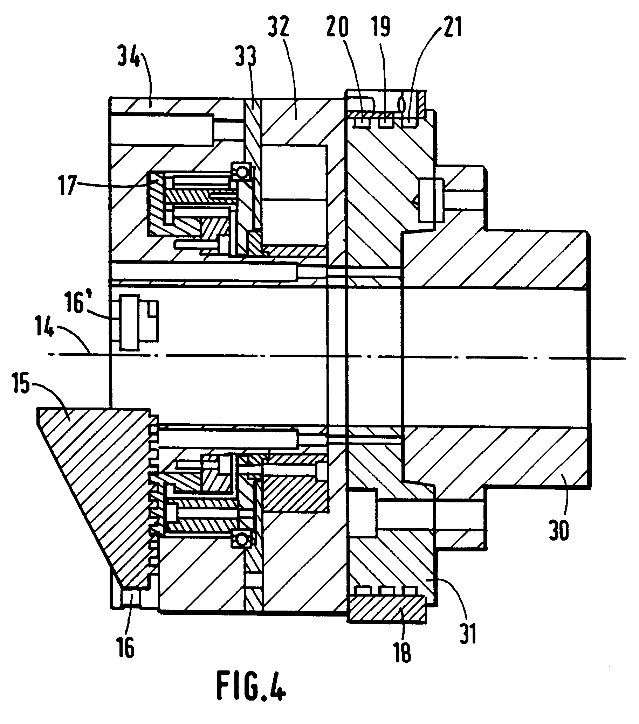

La figure 4 est une vue en coupe du mandrin selon l'invention, analogue à celle des figures 2 et 3, dans laquelle on détaille la structure du corps de mandrin 13. En effet, on s'est attaché dans les figures 2 et 3 à décrire le principe du mors à spirale et des moyens d'entraînement de la couronne, sans montrer les pièces qui composent le corps de mandrin 13.

Le corps de mandrin 13 est, ici, constitué d'une pluralité de pièces; il comprend une interface d'alimentation 31, montée sur celle-ci et qui comporte les rainures d'alimentation et d'échappement 20, 21 et 19, ainsi que les canaux correspondants. Le corps de mandrin 13 comprend ensuite un cylindre 32, relié à l'interface d'alimentation 31, et qui comprend une ou plusieurs chambres 24 pour le moteur à palettes. Sur le cylindre 32, est monté une entretoise extérieure 33, et sur celle-ci le corps 34 dans lequel coulissent les mors. Les différentes pièces 31 à 34 qui composent le corps de mandrin 13 sont par exemple assemblées par tirants, ou par tout autre moyen approprié. L'ensemble est monté sur une broche 30 d'une machine-outil.

L'invention permet de diminuer le poids des mors et d'augmenter ainsi les vitesses de rotation. Le tableau ci-dessous montre différentes valeurs des forces centrifuges à diverses vitesses de rotation, dans un mandrin selon l'invention et pour un mandrin automatique à leviers de l'art antérieur, comportant mors et porte-mors. On a porté dans les colonnes les valeurs des forces engendrées, en fonction des différentes vitesses de rotation. La dernière colonne représente le gain assuré par l'invention par rapport à un dispositif de l'art antérieur. Cette importante diminution des forces permet une utilisation du mandrin selon l'invention à des vitesses bien supérieures, sans aucun risque. On a considéré pour le tableau le cas d'un ensemble connu à mors et porte-mors de masse 2 kg pour un diamètre de pièce de 8 cm. L'invention utilise un mors sans porte-mors de 0,7 kg.

| Vitesse de rotation tr/min | Force centrifuge de desserrage, daN | | |
|---|---|---|---|
| | Mandrin selon l'invention | Mandrin de l'art antérieur | Gain de l'invention |
| 1 000 | 176 | 603 | 427 |
| 2 000 | 704 | 2 412 | 1 709 |
| 3 000 | 1 583 | 5 427 | 3 844 |
| 4 000 | 2 814 | 9 649 | 6 834 |
| 5 000 | 4 397 | 15 076 | 10 679 |
| 6 000 | 6 332 | 21 709 | 15 377 |
| 7 000 | 8 618 | 29 549 | 20 930 |
| 8 000 | 11 257 | 38 594 | 27 338 |
| 9 000 | 14 247 | 48 846 | 34 599 |

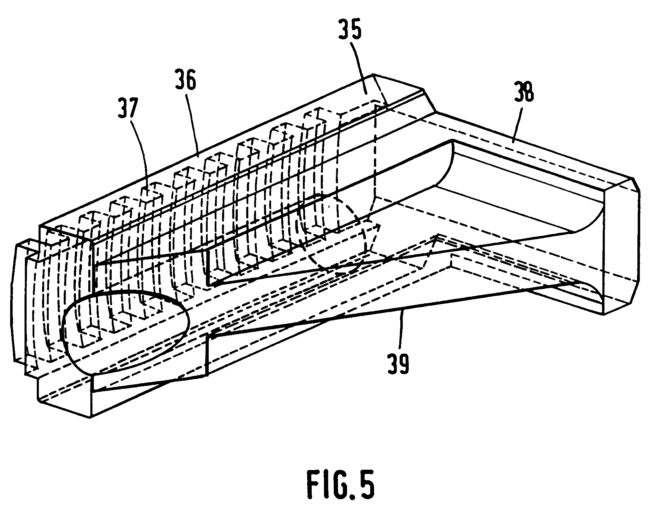

La figure 5 est une vue en perspective d'un mors selon l'invention. Le mors 35 présente une forme générale de "L". Un côté 36 du mors est destiné à être enfilé dans une rainure 16 du corps 34, et comporte sur sa face postérieure une denture 37 qui vient en prise avec la denture conjuguée 17a de la couronne spiralée 17. L'autre côté 38 du mors vient au contact de la pièce à serrer dans le mandrin. Entre les deux côtés du mors, une nervure 39 assure une rigidité maximale. La masse du mors selon l'invention est essentiellement concentrée sur les côtés 36 et 38. De ce fait, le centre de gravité du mors se trouve au voisinage du côté 36 et donc, lorsque le mors est monté sur le mandrin, proche de la rainure 16. Ceci réduit donc le couple de desserrage en rotation engendré par la force de maintien, qui s'exerce sur la denture 37, et par la force centrifuge dont le point d'application est le centre de gravité du mors. Ce couple est encore réduit car le centre de gravité du mors est proche du côté 38, et donc aussi proche que possible de l'axe de rotation.

Pour permettre un meilleur équilibrage statique et un centrage des mors, la denture 37 du côté 36 du mors est décalée pour les différents mors. Dans le cas où l'on utilise trois mors, la denture est décalée d'un mors à l'autre d'une distance égale à un tiers de pas de la spirale de la couronne 17. Pour assurer l'équilibrage dynamique, les mors présentent une cavité, ménagée lors de leur usinage, qui est aussi décalée d'un mors à l'autre le long d'un côté 36.

L'invention n'est pas limitée à l'exemple de réalisation décrit ci-dessus en référence aux figures. Ainsi, il est possible d'utiliser des moyens d'entraînement d'un autre type, de modifier le réducteur ou le moteur à palettes. On peut aussi prévoir un nombre de mors quelconque en ne modifiant que le corps 34 du mandrin automatique. A la place d'air comprimé, on peut employer d'autre fluide sous pression.

L'invention permet d'obtenir un mandrin automatique autorisant des vitesses de rotation importantes, grâce à une conception allégée et à un équilibrage dynamique des mors et de la spirale.

## Revendications

1. Mandrin automatique, comprenant un corps de mandrin (13), une couronne spiralée (17) montée rotative dans le corps de mandrin (13), une pluralité de mors (15) coulissant dans des rainures radiales (16) du corps de mandrin (13) et présentant une denture (37) en prise avec ladite couronne spiralée, des moyens d'entraînement en rotation de la couronne spiralée (17) par rapport au corps de mandrin (13), caractérisé en ce que lesdits moyens d'entraînement sont susceptibles d'entraîner en rotation ladite couronne spiralée en continu et/ou par intermittence, au cours de la rotation du mandrin.

2. Mandrin automatique selon la revendication 1, caractérisé en ce qu'il comprend une bague d'alimentation (18) en fluide sous pression, libre en rotation par rapport au corps de mandrin (13), et en ce que lesdits moyens d'entraînement sont commandés en continu et/ou par intermittence par le fluide sous pression provenant de ladite bague d'alimentation.

3. Mandrin automatique selon la revendication 1 ou 2, caractérisé en ce que ledit fluide sous pression est de l'air comprimé.

4. Mandrin automatique selon l'une des revendications 1 à 3, caractérisé en ce que lesdits moyens d'entraînement comprennent un moteur à palettes.

5. Mandrin automatique selon l'une des revendications 1 à 4, caractérisé en ce que lesdits moyens d'entraînement comprennent un réducteur.

6. Mandrin automatique selon l'une des revendications 4 ou 5, caractérisé en ce que ledit moteur à palettes comprend un rotor (22) à palettes (23), et un cylindre (32) compris dans le corps de mandrin (13) présentant une ou plusieurs chambres (24).

7. Mandrin automatique selon l'une quelconque des revendications 4 à 6, caractérisé en ce que ladite bague d'alimentation (18) débouche sur trois conduits du corps de mandrin (13), respectivement d'échappement, d'alimentation de serrage et d'alimentation de desserrage, reliés audit moteur à palettes.

8. Mandrin automatique selon l'une des revendications 5 à 7, caractérisé en ce que ledit réducteur est constitué d'un porte-satellites (27) relié audit moteur à palettes, dont les satellites (28) sont en prise d'un part sur une denture de ladite couronne spiralée (17) et d'autre part sur la denture d'un planétaire (29) solidaire du corps de mandrin (13).

9. Mandrin automatique selon la revendication 8, caractérisé en ce que le porte-satellites (27) dudit réducteur est relié par un rotor extérieur (26) et par une entretoise (25) au rotor (22) du moteur à palettes.

10. Mandrin automatique selon l'une des revendications 1 à 9, caractérisé en ce que le corps de mandrin (13) comprend une broche (30), une interface d'alimentation (31), un cylindre (32), une entretoise extérieure (33) et un corps (34) formant un ensemble rigide, et une bague d'alimentation (18), un rotor (22), une entretoise (26), un porte-satellites (27) et une couronne spiralée (17) mobiles en rotation par rapport audit ensemble rigide.

11. Mandrin automatique selon l'une des revendications 1 à 10, caractérisé en ce que les mors présentent chacun une cavité, décalée d'un mors à l'autre le long d'un côté (36) des mors, pour assurer l'équilibrage dynamique des mors.

## Claims

1. Automatic chuck comprising a chuck body (13), a spiral crown (17) rotatively mounted in said chuck body (13), a plurality of jaws (15) sliding in radial grooves (16) of said chuck body (13) and having tooth means (37) engaged with said spiral crown, means for driving said spiral ground (17) in rotation with respect to said chuck body (13), characterized in that said drive means are adapted to drive said spiral crown in rotation continuously and/or intermittently, during rotation of said chuck.

2. Automatic chuck according to claim 1, characterized in that it comprises a pressurized fluid feed ring (18) free to rotate with respect to said chuck body (13), and in that said drive means are commanded continuously and/or intermittently by said pressurized fluid originating from said feed ring.

3. Automatic chuck according to claim 1 or 2, characterized in that said pressurized fluid is compressed air.

4. Automatic chuck according to one of claims 1 to 3, characterized in that said drive means comprise a vane motor.

5. Automatic chuck according to one of claims 1 to 4, characterized in that said drive means comprise reduction gear means.

6. Automatic chuck according to one of claims 4 or 5, characterized in that said vane motor comprises a rotor (22) having vanes (23), and a cylinder (32) comprised in said chuck body (13) having one or several chambers (24).

7. Automatic chuck according to any one of claims 4 to 6, characterized in that said feed ring (18) is adapted to discharge at three conduits of said chuck body (13), respectively for discharge, clamping feed and unclamping feed, said conduits being linked to said vane motor.

8. Automatic chuck according to one of claims 5 to 7, characterized in that said reduction gear means consist of a planet carrier (27) linked to said vane motor, the planet wheels (28) of which engage, firstly, with a toothing of said spiral crown (17) and, secondly, with the toothing of a sunwheel (29) rigidly fixed to said chuck body (13).

9. Automatic chuck according to claim 8, characterized in that the planet carrier (27) of said reduction gear is linked, by means of an external rotor (26) and linking means (25) to the rotor (22) of said vane motor.

10. Automatic chuck according to one of claims 1 to 9, characterized in that said chuck body (13) comprises a spindle (30), a feed interface (31), a cylinder (32), external bracing means (33) and a body (34) constituting a rigid unit, and a feed ring (18), a rotor (22), linking means (26), a planet carrier (27) and a spiral crown (17) able to rotate with respect to said rigid unit.

11. Automatic chuck according to one of claims 1 to 10, characterized in that the jaws each have a cavity offset from one jaw to the next along one side (36) of said jaws, to provide dynamic jaw balancing.

## Patentansprüche

1. Automatische Einspannvorrichtung mit einem Drehfutter-Körper (13), einem drehbar im Drehfutter-Körper (13) montierten Kranz (17) mit Spiralen (couronne spiralée), mehreren Spannbacken (15), welche in Radialnuten (16) des Drehfutter-Körpers (13) gleiten und eine Verzahnung (37) besitzen, die in den mit Spiralen versehenen Kranz (17) eingreift, Antriebsmitteln zur Drehbewegung des Spiralen aufweisenden Kranzes (17) in bezug auf den Drehfutter-Körper (13),
dadurch gekennzeichnet,
daß die genannten Antriebsmittel so ausgebildet sind, daß sie den Spiralen aufweisenden Kranz während der Rotation des Drehfutters in ununterbrochene und/oder intermittierende Rotationsbewegung versetzen.

2. Automatische Einspannvorrichtung nach Anspruch 1, dadurch gekennzeichnet, daß sie einen Versorgungsring (18) für ein Fluid unter Druck enthält, der in bezug auf den Drehfutter-Körper (13) frei rotierbar ist, und dadurch, daß die genannten Antriebsmittel ununterbrochen und/oder intermittierend von dem unter Druck stehenden und aus dem Versorgungsring kommenden Fluid betrieben werden.

3. Automatische Einspannvorrichtung nach Anspruch 1 oder 2, dadurch gekennzeichnet, daß das besagte Druckfluid Druckluft ist.

4. Automatische Einspannvorrichtung nach einem der Ansprüche 1 bis 3, dadurch gekennzeichnet, daß die genannten Antriebsmittel einen Flügel- oder Schaufelmotor enthalten.

5. Automatische Einspannvorrichtung nach einem der Ansprüche 1 bis 4, dadurch gekennzeichnet, daß die Antriebsmittel ein Reduzierstück bzw. Untersetzungsgetriebe enthalten.

6. Automatische Einspannvorrichtung nach einem der Ansprüche 4 oder 5, dadurch gekennzeichnet, daß der Schaufelmotor einen Rotor (22) mit Flügeln oder Schaufeln (23) sowie einen im Drehfutter-Körper (13) enthaltenen Zylinder (32) aufweist, der eine oder mehrere Kammern (24) anbietet.

7. Automatische Einspannvorrichtung nach einem der Ansprüche 4 bis 6, dadurch gekennzeichnet, daß sich der genannte Versorgungsring (18) zu drei Führungen des Drehfutter-Körpers (13) öffnet bzw. in den Auslaß der Versorgung für das Spannen und der Versorgung für das Lösen, welche mit dem genannten Schaufelmotor verbunden sind.

8. Automatische Einspannvorrichtung nach einem der Ansprüche 5 bis 7, dadurch gekennzeichnet, daß das Reduzierstück bzw. Untersetzungsgetriebe von einem mit dem Schaufelmotor verbundenen Planetenrad- oder Satellitenträger (27) gebildet wird, dessen Planetenräder (28) einerseits in eine Verzahnung des mit Spiralen versehenen Kranzes (17) und andererseits in die Verzahnung eines Zentralrades (29) eingreifen, welches mit dem Drehfutter-Körper (13) fest verbunden ist.

9. Automatische Einspannvorrichtung nach Anspruch 8, dadurch gekennzeichnet, daß die Planetenrad-Eingangsstufe bzw. der Satellitenträger (27) des Untersetzungsgetriebes über einen äußeren Rotor (26) und über ein Abstandsstück (25) mit dem Rotor (22) des Flügel- oder Schaufelmotors verbunden ist.

10. Automatische Einspannvorrichtung nach einem der Ansprüche 1 bis 9, dadurch gekennzeichnet, daß der Drehfutter-Körper (13) eine Welle (30), eine Versorgungs-Übergangsstelle (31), einen Zylinder (32), ein äußeres Abstandsstück (33) und einen Körper (34) enthält, welche zusammen eine starre Konstruktion bilden, sowie einen Versorgungsring (18), einen Rotor (22), ein Abstandsstück (26), einen Planetenrad- bzw. Satellitenträger (27) und einen Spiralen enthaltenden Kranz (17), die in Bezug auf die starre Konstruktion in Rotationsbewegungen versetzbar sind.

11. Automatische Einspannvorrichtung nach einem der Ansprüche 1 bis 10, dadurch gekennzeichnet, daß jede der Spannbacken eine Vertiefung aufweist, die von einer zur anderen Spannbacke entlang einer Seite (36) der Spannbacken einen Absatz bildet, um das dynamische Gleichgewicht der Spannbacken sicherzustellen.
